Europäisches Patentamt

European Patent Office

Office européen des brevets

(19)

(11) Veröffentlichungsnummer: **0 361 201**
**A1**

(12) **EUROPÄISCHE PATENTANMELDUNG**

(21) Anmeldenummer: **89116862.7**

(22) Anmeldetag: **12.09.89**

(51) Int. Cl.5: **C02F 1/44 , B01D 17/04**

(30) Priorität: **21.09.88 DE 3831976**

(43) Veröffentlichungstag der Anmeldung:
**04.04.90 Patentblatt 90/14**

(84) Benannte Vertragsstaaten:
**ES GR**

(71) Anmelder: **Henkel Kommanditgesellschaft auf Aktien**
**Henkelstrasse 67**
**D-4000 Düsseldorf 13(DE)**

(72) Erfinder: **Müller, Uwe**
**Südallee 70**
**D-4000 Düsseldorf 13(DE)**
Erfinder: **Sedelies, Reinhold, Dr.**
**Backeskamp 39**
**D-4030 Ratingen 8(DE)**
Erfinder: **Spei, Brigitte**
**Harffstrasse 129 a**
**D-4000 Düsseldorf 13(DE)**
Erfinder: **Wehle, Volker, Dr.**
**Alsenstrasse 7**
**D-5657 Haan(DE)**

(54) Verfahren zum Entsorgen verbrauchter Öl-/Wasseremulsionen.

(57) Die Erfindung betrifft ein Verfahren zum Entsorgen verbrauchter Öl-·Wasseremulsionen, wobei die Emulsion mit einem organischen Spaltmittel gespalten wird. Damit gleichzeitig kostengünstig gearbeitet werden kann und auch die gesetzlichen Bestimmungen einhaltbar sind, wird vorgeschlagen, daß die bei der Spaltung entstandene Wasserphase einer Mikro-/Ultrafiltration unterworfen wird und daß das bei der Membranfiltration anfallende Retentat einem nachfolgenden Spaltansatz vor dem Spalten zugeführt wird.

Fig. 1

EP 0 361 201 A1

EP 0 361 201 A1

## Verfahren zum Entsorgen verbrauchter Öl-/Wasseremulsionen

Die Erfindung betrifft ein Verfahren zum Entsorgen verbrauchter Öl- Wasseremulsionen, wobei die Emulsion mit einem organischen Spaltmittel gespalten wird, die bei der Spaltung entstandene Wasserphase einer Micro- Ultrafiltration unterworfen wird und das bei der Membranfiltration anfallende Retentat einem nachfolgenden Spaltansatz zugeführt wird.

Unter dem Begriff Öl- Wasseremulsion werden im folgenden sowohl Öl-in-Wasser- als auch Wasser-in-Öl-Emulsionen verstanden.

Solche Öl-Wasseremulsionen fallen in großen Mengen in der metallerzeugenden, metallbearbeitenden und metallverarbeitenden Industrie an. Die Emulsionen werden in diesen Industriezweigen als Kühlschmierstoffe, Ziehhilfsmittel sowie Bohr- und Schleifmittel bei span- und formgebenden Prozessen, z.B. beim Schleifen, Bohren, Ziehen und Walzen eingesetzt. Diese Emulsionen bestehen in der Ölphase vorwiegend aus natürlichen oder synthetischen Ölen unterschiedlichster chemischer Zusammensetzung und Herkunft, ferner in der Öl- und Wasserphase aus Emulgatoren, Netzmitteln und anderen Hilfsstoffen. In den geschilderten Begriff der Emulsionen sollen auch die klassischen, durch Öleintrag verunreinigten alkalischen, neutralen oder sauren Entfettungs- und Reinigungsbäder einbezogen werden.

Diese Emulsionen unterliegen bei ihrer Anwendung einem Verschleiß und müssen regelmäßig oder diskontinuierlich entsorgt werden. Dazu werden die Emulsionen üblicherweise gespalten. Das heißt, der Ölanteil muß möglichst weitgehend von der Spaltwasserphase getrennt werden, um diese nach entsprechender Nachbehandlung ökologisch unbedenklich in die Kanalisation oder den Vorfluter ableiten zu können. Bei der Nachbehandlung ist es wichtig, den Abwassergrenzwert hinsichtlich petroletherextrahierbarer Stoffe von 10 beziehungsweise 20 mg.l einzuhalten. Zum Teil muß auch auf das Einhalten eines bestimmten CSB-Wertes (Chemischer Sauerstoffbedarf) geachtet werden.

Die im Stand der Technik bekannten Entsorgungsverfahren sind z.B. in der deutschen Zeitschrift "Wasser, Luft, Betrieb" 1987, Nr. 5, Seite 20 und in der gleichen Zeitschrift 1988, Nr. 5, Seite 28 und Nr. 4, Seite 20 beschrieben. Danach können sechs unterschiedliche bekannte Verfahren unterschieden werden, die jedoch in der Anwendung bedeutende Nachteile aufweisen:

Werden die Emulsionen direkt eingedampft (Thermische Spaltung), wird sehr viel Energie benötigt. In einem anderen Verfahren kann durch Zugabe von Adsorptionsmitteln die Ölphase gebunden werden (Adsorptive Spaltung). Nachteilig sind hier die großen Schlammengen, die als Sondermüll entsorgt werden müssen. In einem weiteren bekannten Verfahren werden den Emulsionen Koagulationshilfsmittel zugesetzt (Flotation). Diese Zugabe ist wegen der hohen Stabilität der heute verwendeten Emulsionen notwendig. Auch hier fallen großen Schlammengen an. In einem vierten bekannten Verfahren wird die Emulsion mit Hilfe einer Ultrafiltrationsmembran entwässert. Bei diesem Verfahren können in der Praxis kaum Wassergehalte unterhalb von 50 % innerhalb der Ölphase erreicht werden. Der ferner vorhandene Gehalt an Schwermetallen in der Wasserphase führt zu weiteren Problemen. In einem anderen bekannten Verfahren wird die Emulsion durch Zugabe von Säure im pH-Bereich von weniger als 2 in eine Wasserphase und eine frei flotierende Ölphase getrennt. Das anfallende saure Altölflotat führt zu Problemen, da dessen Entsorgung hohe Kosten verursacht. Weitere Probleme ergeben sich bei dieser sogenannten Säurespaltung in der Aufsalzung der Spaltwasserphase durch Säure und die nachfolgende notwendige Neutralisationsmittelzugabe. In einem sechsten bekannten Verfahren wird die Emulsion durch Salz gespalten. Hier müssen jedoch große Salzmengen eingesetzt werden, die zu einer starken Aufsalzung der Spaltwasserphase führen. Die Spaltwasserphase ist damit im allgemeinen nicht mehr in die Kanalisation oder den Vorfluter ableitbar. Mit allen diesen Verfahren, abgesehen von der thermischen Spaltung, lassen sich die zur Zeit noch in der Diskussion befindlichen Abwassergrenzwerte nicht einhalten.

Ein Verfahren der eingangs genannten Art ist aus der DE-OS 25 28 990 bekannt. Dabei tritt jedoch das folgende Problem auf. Die organischen Spaltmittel enthalten kationische Tenside, die bei organischen Membranen eine irreversible Verblockung hervorrufen können. Zum Beispiel neigen Polysulfon-Ultrafiltrations-Membranen bei Mehrfachbeaufschlagung mit einer reinen 1%igen Lösung eines hochmolekularen Kationtensids in vollionisiertem Wasser bei nur mäßiger Rückhaltung zu einer langsamen Verblockung. Eine Reinigung der verblockten Membran durch Spülen mit Wasser ist überhaupt nicht, eine Reinigung mit Chemikaliendosierung kaum oder nur mit großem Aufwand möglich.

Der Erfindung liegt daher die Aufgabe zugrunde, ein Verfahren der eingang genannten Art zu entwickeln, bei dem ein Verblocken der Membran weitgehend ausgeschlossen ist.

Diese Aufgabe wird erfindungsgemäß dadurch gelöst, daß das Retentat dem nachfolgenden Spaltansatz vor dem Spalten zugeführt wird und daß entweder anorganische Membranen oder organische Membranen und ein derartiges Spaltmittel verwendet werden, das im wesentlichen nicht an diesen Membranen

2

adsobierbar ist oder bei der Verwendung organischer Membranen mit negativen endständigen Gruppen das Spaltmittel höchstens in der Konzentration zugegeben wird, daß keine zusätzlichen freien Kationtenside vorliegen.

Durch die Rückführung des Retentats braucht beim erfindungsgemäßen Verfahren nur die Ölphase entsorgt zu werden, was zum Beispiel durch Verbrennen geschehen kann. Das ablaufende Permeat wird abgeleitet. Ein weiterer Vorteil ist die geringe Ölbelastung des Einsatzmaterials, das unabhängig vom eingesetzten Membranverfahren zu hohen spezifischen Permeatflußraten und damit zu kleineren Anlagen führt.

Überraschenderweise zeigt es sich, daß im erfindungsgemäßen Verfahren allein schon bei einer Mikrofiltration häufig die vom Gesetzgeber geforderten und auch die zur Zeit in der Diskussion befindlichen Grenzwerte unterschritten werden. Die Mikrofiltration hat gegenüber der Ultrafiltration um ein Mehrfaches höhere spezifische Permeatflußraten bei niedrigem Energieeintrag.

Sollen noch weitergehende Schwermetall- und/oder CSB-Grenzwerte eingehalten werden, wird vorgeschlagen, daß das bei der Mikro-/Ultrafiltration anfallende Permeat einer Umkehrosmose unterworfen wird. Eine solche weitere Reinigung des Permeats kann auch durch eine nachfolgende Fällung vorgenommen werden.

Als vorteilhaft hat sich ferner herausgestellt, wenn das Retentat durch die Membranfiltration um den Faktor 10 bis 20 aufkonzentriert wird.

Im erfindungsgemäßen Verfahren können sowohl organische als auch anorganische Membranen verwendet werden. Bei der Verwendung anorganischer Membranen sind Adsorptionseffekte am Membranmaterial ausgeschlossen. Diese sind daher besonders vorteilhaft.

Werden organische Membranen verwendet, so wird vorgeschlagen, daß das Spaltmittel höchstens in der optimalen Konzentration zugegeben wird. Werden Membranen aus organischen Materialien verwendet, so sind bei solchen mit negativen endständigen Gruppen Adsorptionseffekte nicht immer ganz ausgeschlossen. Nur in sochen Fällen sollte das Spaltmittel höchstens in der Konzentration dosiert werden, daß keine zusätzlichen freien Kationtenside vorliegen. Grundsätzlich ist damit auch jede organische Mikro-Ultrafiltrationsmembran geeignet.

Ferner wird im Fall der Verwendung organischer Membranen vorgeschlagen, daß derartige Spaltmittel verwendet werden, die im wesentlichen nicht an diesen Membranen adsorbierbar sind. Diese Forderung erfüllen Spaltmittel mit bestimmten, besonders hohen Molekulargewichten.

Die Betriebsparameter beeinflussen beim erfindungsgemäßen Verfahren sowohl die Permeatqualität wie auch die mögliche Betriebszeit zwischen zwei Reinigungsintervallen. Es muß eine turbulente Anströmung der Membran sichergestellt sein. Bei für die Abwasserbehandlung besonders vorteilhaften Rohrmodulen sollte die Überströmgeschwindigkeit mindestens 3 m/s, vorzugsweise bei der Mikrofiltration 5 bis 6 m/s betragen. Vorzugsweise beträgt die Temperatur der Wasserphase während der Membranfiltration höchstens 35 °C. Schließlich sind geringe transmembrane Druckdifferenzen vorteilhaft; bei der Mikrofiltration sollte mit einer über die Länge der Membran gemittelten Druckdifferenz von höchstens 1 bar gearbeitet werden. Dabei kann die Druckdifferenz innerhalb der Membran zum Beispiel auch durch eine Erhöhung des Druckes auf der Permeatseite reduziert werden.

Eine weitere, besonders vorteilhafte Ausführung des erfindungsgemäßen Verfahrens liegt darin, bei konstanter Überströmgeschwindigkeit an der Membran den Permeatfluß zu regeln beziehungsweise zu begrenzen. Dadurch wird die Permeatausbeute zwischen zwei Reinigungsintervallen gesteigert.

Im folgenden werden Ausführungsbeispiele der Erfindung anhand von Zeichnungen näher beschrieben. Es zeigen:

Figur 1: ein Blockfließbild des Verfahrens zum Entsorgen verbrauchter Öl-Wasseremulsionen und

Figur 2: ein Diagramm, in dem der Durchfluß in l h und m² von Spaltwasser für verschiedene Verfahren über der Zeit in Stunden aufgetragen ist.

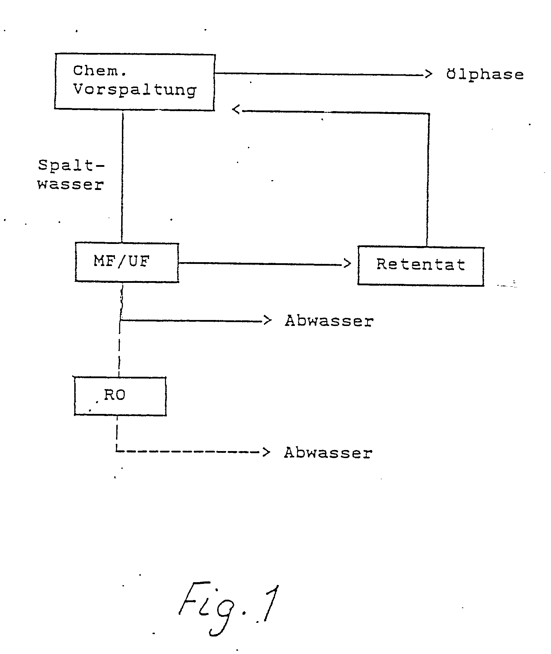

Entsprechend Figur 1 wird in der chemischen Vorspaltung die Emulsion durch definierte Zugabe von organischen Spaltchemikalien gebrochen. Die aufschwimmende wasserarme Ölphase, die gleichzeitig einen Teil der Schwermetalle adsorbiert und damit die Spaltwasserphase entlastet, kann entsorgt werden, zum Beispiel durch Verbrennung. Die Spaltwasserphase wird der Membranfiltration zugeführt. Bei der Membran handelt es sich um eine Mikro- bzw. Ultrafiltrationsmembran (MF UF), je nach Anwendungsfall. Das aus der Membranfiltration ablaufende Permeat wird als Abwasser abgeleitet. Das Retentat aus der Membranfiltration, das durch die Filtration um den Faktor 10 bis 20 aufkonzentriert worden ist, wird einem weiteren Spaltansatz vor dem Spalten zugesetzt. Wegen dieser Rückführung des aufkonzentrierten Retentats ist in diesem Verfahren lediglich die wasserarme Ölphase zu entsorgen. Sollten noch weitergehende Schwermetall- und/oder CSB-Grenzwerte einzuhalten sein, kann dieses Permeat der Umkehrosmose (RO in Figur 1) zugeführt werden. Dies ist insbesondere deshalb möglich, weil schon wesentliche, bei der Umkehrosmose sonst störende Begleitstoffe bereits entfernt sind. In diesem Fall muß zusätzlich das Retentat der Umkehrosmose entsorgt werden. Dieser zusätzliche Reinigungsschritt ist in Figur 1 gestrichelt eingezeichnet. Statt der Umkehrosmose kann auch eine Fällung vorgenommen werden.

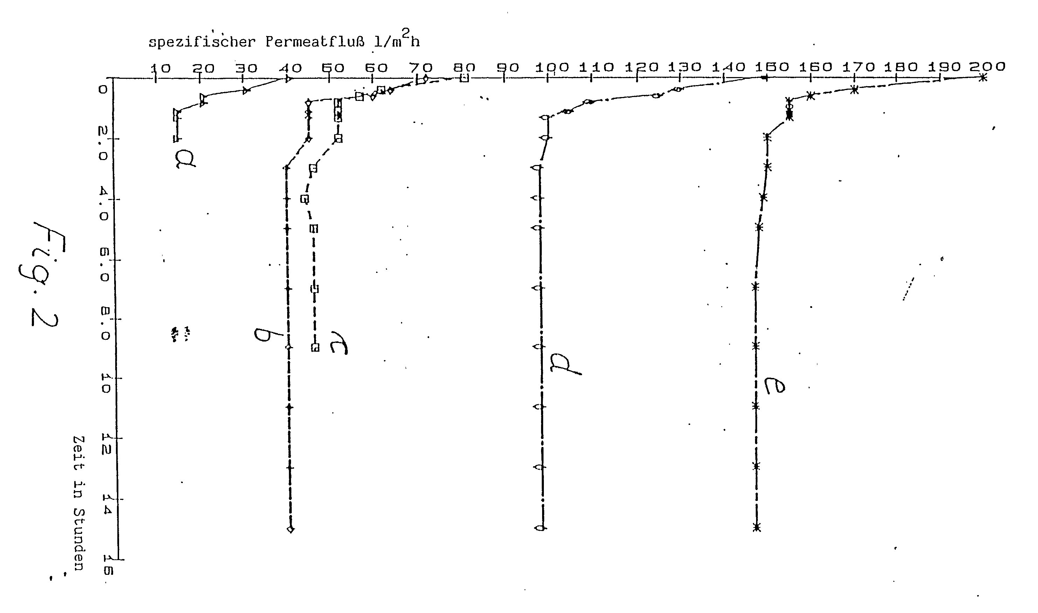

In Figur 2 sind die Ergebnisse von Versuchen mit einem Emulsionstyp und unterschiedlichen Membranen dargestellt. Die Kurve (a) zeigt den Durchfluß einer ungespaltenen Emulsion durch eine organische Ultrafiltrationsmembran mit einer Trenngrenze von 20 000 D über der Zeit. Die geringe erreichbare integrale Permeatmenge bei sehr niedrigem spezifischen Permeatfluß ist deutlich erkennbar. Die Kurve (c) zeigt den Durchfluß von Spaltwasser durch dieselbe Membran. In Kurve (b) ist der Durchfluß von Spaltwasser durch eine anorganische Membran mit einer Trenngrenze von 10 000 D dargestellt. Kurven (d) und (e) stellen die Durchflußmenge durch eine Mikrofiltrationsmembran (0.2 μm) aus anorganischem Material dar. Bei allen beschriebenen Versuchen wurde der Abwassergrenzwert hinsichtlich petroletherextrahierbarer Stoffe von 20 mg m³ unterschritten.

Die nachfolgende Tabelle zeigt ein Ausführungsbeispiel, in dem eine Emulsion mit dem pH-Wert 6.8 gespalten wurde und das Spaltwasser anschließend einer Ultrafiltration unterzogen wurde. Das erhaltene Permeat wurde mittels Umkehrosmose gereinigt. Die Abkürzungen innerhalb der Tabelle bedeuten:
PE gleich Petrolether-Extrakt,
a-, n- und k-Tenside sind anionische, nichtionische und kationische Tenside.
NM bedeutet Netzmittel,
in der linken Spalte sind das Datum und die Uhrzeit dargestellt,
UF bedeutet Ultrafiltration.
RO bedeutet Umkehrosmose,
n.n. bedeutet nicht nachweisbar.

Aus der Tabelle ist erkennbar, daß der PE-Wert zunächst durch die Emulsionsspaltung drastisch zurückgeht auf einen Wert, der jedoch noch nicht den geforderten Grenzwert von 20 mg/l erreicht. Dieser Grenzwert wird nach Ultrafiltration erhalten. Für noch höhere Reinheit des Spaltwassers kann die Umkehrosmose verwendet werden. Damit läßt sich der PE-Wert bis unter die Nachweisgrenze senken. Auch der CSB-Wert sowie der Schwermetallgehalt nimmt durch die einzelnen Reinigungsstufen mehr oder weniger stark ab. Insbesondere ist erkennbar, daß der Metallgehalt zum größten Teil in der Ölphase verbleibt.

| | pH-Wert der Originalemulsion 6.8 | | | | | | | | | |
| --- | --- | --- | --- | --- | --- | --- | --- | --- | --- | --- |
| | PE (mg/l) | | CSB (mgO₂ l) | Cu | Fe | Zn | Al | a- | n- | K-Tenside |
| | incl. | abz. NM | | | (mg/l) | | | | (mg/l) | |
| Emulsion unbeh. | 15.220 | 6.630 | 38.600 | 1,9 | 77,1 | 27,6 | 9,3 | 985 | 4,0 g/l | 375,8 |
| Spaltwasser | 490 | 200 | 32.900 | 0,2 | 5,2 | 5,9 | 1,0 | 14,0 | 2,6 g/l | 58,8 |
| Spaltw. nach UF | | | | | | | | | | |
| 14.04. 8.15 | 230 | 100 | 22.300 | | 2,5 | 1,6 | | 10,6 | 1,9 g/l | 6,6 |
| 14.04. 8.30 | 280 | 110 | 17.100 | | 1,9 | 1,5 | | 6,1 | 1,1 g/l | 6,8 |
| 14.04. 10.45 | 140 | 50 | 20.400 | | 2,0 | 1,5 | | 5,4 | 1,1 g/l | 3,7 |
| 14.04. 12.05 | 120 | 60 | 17.600 | | 2,0 | 1,5 | | 7,7 | 1,2 g/l | 2,3 |
| 14.04. 14.45 | 90 | 20 | 19.800 | | 1,5 | 1,4 | | 6,6 | 1,3 g/l | 5,7 |
| 14.04. 18.40 | 140 | 20 | 20.200 | | 2,0 | 1,5 | | | | |
| Spaltw. nach RO vom 22.04. | n.n. | n.n. | 33.3 | | <0,1 | <0,1 | | 0 | 4.4 mg/l | 1,54 |

## Ansprüche

1. Verfahren zum Entsorgen verbrauchter Öl-Wasseremulsionen, wobei die Emulsion mit einem organischen Spaltmittel gespalten wird, die bei der Spaltung entstandene Wasserphase einer Mikro-Ultrafiltration unterworfen wird, das bei der Membranfiltration anfallende Retentat einem nachfolgenden Spaltansatz zugeführt wird,
dadurch gekennzeichnet,

daß das Retentat dem nachfolgenden Spaltansatz vor dem Spalten zugeführt wird und daß entweder anorganische Membranen oder organische Membranen und ein derartiges Spaltmittel verwendet werden, das im wesentlichen nicht an diesen Membranen adsorbierbar ist oder bei der Verwendung organischer Membranen mit negativen endständigen Gruppen das Spaltmittel höchstens in der Konzentration zugegeben wird, daß keine zusätzlichen freien Kationtenside vorliegen.

2. Verfahren nach Anspruch 1,
dadurch gekennzeichnet,
daß das Retentat durch die Membranfiltration um den Faktor 10 bis 20 aufkonzentriert wird.

3. Verfahren nach Anspruch 1,
dadurch gekennzeichnet,
daß das bei der Mikro-/Ultrafiltration anfallende Permeat einer Umkehrosmose unterworfen wird.

4. Verfahren nach Anspruch 1,
dadurch gekennzeichnet,
daß das bei der Querstrom-Membranfiltration anfallende Permeat einer Fällung unterworfen wird.

5. Verfahren nach Anspruch 1,
dadurch gekennzeichnet,
daß die Querstrom-Membranfiltration mit Mikrofiltern durchgeführt wird.

6. Verfahren nach Anspruch 1,
dadurch gekennzeichnet,
daß die Querstrom-Membranfiltration mit Ultrafiltern durchgeführt wird.

7. Verfahren nach Anspruch 1,
dadurch gekennzeichnet,
daß die Membran turbulent angeströmt wird und die Überströmgeschwindigkeit mindestens 3 m/s, bei der Mikrofiltration bevorzugt 5 bis 6 m/s beträgt.

8. Verfahren nach Anspruch 1,
dadurch gekennzeichnet,
daß die Temperatur der Wasserphase während der Membranfiltration höchstens 35 $^\circ$C beträgt.

9. Verfahren nach Anspruch 1,
dadurch gekennzeichnet,
daß bei der Membranfiltration mit einer über die Länge der Membran gemittelten Druckdifferenz von höchstens 1 bar gearbeitet wird.

10. Verfahren nach Anspruch 1,
dadurch gekennzeichnet,
daß der Permeatfluß bei der Membranfiltration derart geregelt wird, daß die Betriebszeit zwischen zwei Reinigungsintervallen verlängert wird.

Chem.
Vorspaltung ─────────────────────> Ölphase

< ──────────────────┐

Spaltwasser

MF/UF ─────────────> Retentat

─────────> Abwasser

RO

└─────────────> Abwasser

Fig. 1

Fig. 2

| Europäisches Patentamt | **EUROPÄISCHER RECHERCHENBERICHT** | Nummer der Anmeldung |
|---|---|---|
| | | EP 89 11 6862 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 546 579 (W. PREEN)<br>---<br> | | C 02 F 1/44<br>B 01 D 17/07 |
| A | FETTE, SEIFEN, ANSTRICHMITTEL, Band 86, Nr. 1, Januar 1984, Seiten 18-24, Stuttgart, DE; R. RAUTENBACH et al.: "De Aufbereitung ölhaltiger Industriewaschwässer durch Mikrofiltration/Ultrafiltration"<br>----- | | |
| | | | **RECHERCHIERTE SACHGEBIETE (Int. Cl.5)** |
| | | | C 02 F 1/00<br>B 01 D 17/00 |

Der vorliegende Recherchenbericht wurde für alle Patentansprüche erstellt

| Recherchenort | Abschlußdatum der Recherche | Prüfer |
|---|---|---|
| DEN HAAG | 18-12-1989 | DEVISME F.R. |